Europäisches Patentamt

European Patent Office

Office européen des brevets

(11) Veröffentlichungsnummer: **0 475 085 B1**

## (12) EUROPÄISCHE PATENTSCHRIFT

(45) Veröffentlichungstag der Patentschrift: **22.02.95**

(51) Int. Cl.⁶: **G01B 11/02**, G01B 11/16, G01N 3/06

(21) Anmeldenummer: **91113374.2**

(22) Anmeldetag: **09.08.91**

(54) **Messverfahren zur Bestimmung der Bruchdehnung einer Zugprobe im rechnergesteuerten Zugversuch.**

(30) Priorität: **13.09.90 DE 4029013**

(43) Veröffentlichungstag der Anmeldung:
**18.03.92 Patentblatt 92/12**

(45) Bekanntmachung des Hinweises auf die
Patenterteilung:
**22.02.95 Patentblatt 95/08**

(84) Benannte Vertragsstaaten:
**AT BE CH DE DK ES FR GB GR IT LI LU NL SE**

(56) Entgegenhaltungen:
**EP-A- 0 194 354**
**EP-A- 0 289 084**

**MATERIALPRÜFUNG, Bd. 31, Nr. 11, November 1989, München, DE, Seiten 371-376; G. ROBILLER: "Probleme des rechnergesteuerten Zugversuchs"**

**PATENT ABSTRACTS OF JAPAN vol. 12, no. 12 (P-655) 14. Januar 1988; & JP-A-62 170 835**

(73) Patentinhaber: **Thyssen Stahl Aktiengesell-schaft**
**Kaiser-Wilhelm-Strasse 100**
**D-47166 Duisburg (DE)**

(72) Erfinder: **Harder, Jürgen, Ing. (grad.)**
**Richard-Wagner-Strasse 22**
**W-4133 Neukirchen/Vlluyn (DE)**
Erfinder: **Robiller, Günter, Ing. (grad.)**
**Alfredstrasse 28**
**W-4330 Mülheim/Ruhr (DE)**
Erfinder: **Sonne, Hans-Martin, Dipl.-Ing.**
**Beethovenstrasse 2a**
**W-4220 Oberhausen (DE)**

(74) Vertreter: **Cohausz & Florack Patentanwälte**
**Postfach 33 02 29**
**D-40435 Düsseldorf (DE)**

**Beschreibung**

Die Bestimmung der Bruchdehnung im rechnergesteuerten Zugversuch (nach DIN EN 10002/1) erfolgt heute durch einen mit zwei Meßfühlern an der Zugprobe befestigten Dehnungsaufnehmer. Dabei werden vorzugsweise inkrementale, aber auch induktive Dehnungsaufnehmer verwendet. Mit diesen Dehnungsaufnehmern wird die Probenverlängerung zwischen den beiden Meßfühlern bis zum Probenbruch gemessen. Die Genauigkeit des Meßergebnisses hängt dabei im wesentlichen von der Lage des Bruches gegenüber den beiden Meßfühlern des Dehnungsaufnehmers ab. Zuverlässig kann die Bruchdehnung auf diese Art und Weise nur gemessen werden, wenn der Bruch mittig zwischen den Meßfühlern des Dehnungsaufnehmers eintritt. Bei sehr duktilen Werkstoffen führen bereits außermittige Brüche, die aber noch deutlich zwischen den Fühlern des Dehnungsaufnehmers liegen, zu geringeren Bruchdehnungswerten, da ein Teil der Einschnürdehnung außerhalb der Meßfühler liegt und somit vom Dehnungsaufnehmer nicht mitgemessen wird.

Eine Verbesserung der Bestimmung der Bruchdehnung ergibt sich dann, wenn man die für die Bruchdehnung maßgebende Dehnung der Zugprobe als Summe aus Gleichmaßdehnung und Einschnürdehnung bestimmt. Dabei entspricht die Einschnürdehnung der gesamten Probenverlängerung (Querhauptweg) nach Überschreiten des Kraftmaximums. Dieses Verfahren liefert unabhängig von der Bruchlage gegenüber den Meßfühlern des Dehnungsaufnehmers aber nur dann zuverlässige Werte, wenn die Meßlänge $L_o$ ($L_o$ = Anfangsmeßlänge (mm) der Zugprobe vor dem Zugversuch) etwa gleich der Probenversuchslänge $L_c$ (mm) ist. Mit zunehmender Versuchslänge gegenüber der Meßlänge (steigendes $L_c/L_o$-Verhältnis) werden im rechnergesteuerten Zugversuch zunehmend höhere und damit falsche Bruchdehnungswerte ermittelt. Der Grund für die falschen Bruchdehnungswerte besteht darin, daß nach diesem Verfahren immer die ganze Einschnürdehnung gemessen wird. Im Gegensatz dazu werden bei der manuellen Bruchdehnungsbestimmung nach DIN EN 10002/1 auch bei außermittigen Brüchen und Endbrüchen eindeutige Werte für die Bruchdehnung erhalten (Zeitschrift: Materialprüfung 31 (1989) 11-12, S. 371-376).

Um die Dehnung einer Zugprobe, nicht deren Bruchdehnung zu messen, ist eine Apparatur bekannt, bei der auf der Zugprobe mit Abstand voneinander zwei zur Zugrichtung quer verlaufende Linien angeordnet sind, die von einer oder zwei Liniensensorkameras zusammen mit ortsfesten Vergleichsmarkierungen erfaßt werden. Aus den so gelieferten Meßwerten läßt sich die Verlängerung der Zugprobe ermitteln (DE 38 13 340 A1). Für die Bestimmung der Bruchdehnung einer Zugprobe ist diese Apparatur nicht geeignet. In der ähnlichen Anordnung nach EP-A-0 289 084 sind mehrere solcher Linien dermaßen auf der Zugprobe aufgebracht, daß sowohl die Einschnürdehnung als auch die Totaldehnung zur Bestimmung der Bruchdehnung erfaßt werden kann.

Aufgabe der Erfindung ist es, ein Meßverfahren für den rechnergesteuerten Zugversuch zu schaffen, das auch bei außermittigen Probenbrüchen nach den in DIN EN 10002/1 festgelegten Regeln der Endbruchmessung zuverlässige Bruchdehnungswerte liefert. Darüber hinaus sollte die erhaltene Bruchdehnung unabhängig vom $L_c/L_o$-Verhältnis sein.

Diese Aufgabe wird mit einem Meßverfahren zur Bestimmung der Bruchdehnung an einer Zugprobe, insbesondere aus Metall, im rechnergesteuerten Zugversuch gelöst, bei dem laufend mittels einer Liniensensorkamera (CCD-Kamera) eine auf der Zugprobe angebrachte, aus quer zur Zugrichtung verlaufenden Rasterlinien bestehende Meßrasterzeile erfaßt wird und für die dabei festgestellten unterschiedlichen Helligkeitswerte Meßwerte an einen Rechner geliefert werden, der, wenn die Zugkraft nach Überschreiten ihres Maximums auf Null abfällt, aus den aktuellen Meßwerten die Abstände benachbarter Rasterlinien errechnet und den Ort, an dem der Abstand zwischen zwei benachbarten Rasterlinien am größten ist als Ort des Bruches auswählt sowie die Abstände zwischen den diesem Ort benachbarten Rasterlinien für die normgemäße Berechnung der Bruchdehnung verwertet.

Im Unterschied zur manuellen Bruchdehnungsbestimmung erfolgt bei der Erfindung die Messung der Probenverlängerung nicht nach, sondern im Augenblick des Bruches. Erst dadurch ist es möglich geworden, mit der Kamera exakte Bruchdehnungswerte zu ermitteln, denn die Messung nach dem Bruch erfordert die zusätzliche Vermessung des entstandenen Bruchspaltes, was bei der optischen Messung dann problematisch wird, wenn der Bruch durch eine Rasterlinie verläuft oder wenn der Bruch nicht senkrecht zur Probenoberfläche verläuft.

Ein Vergleich der Meßergebnisse des erfindungsgemäßen Meßverfahrens mit den Meßergebnissen der manuellen Bruchdehnungsbestimmung nach DIN EN 10002/1 hat gezeigt, daß das erfindungsgemäße Meßverfahren den Anforderungen von DIN EN 10002/1 genügt, insbesondere bei der Endbruchsmessung, wenn der Probenbruch außerhalb des mittleren Drittels der Meßlänge erfolgt.

Bei der Erfindung wird das bei der manuellen Bruchdehnungbestimmung bewährte Meßraster in abgewandelter Form verwendet, um eine optimale Abbildung in der Kamera zu erreichen. Anstelle der Anreißlinien wird ein lichtabsorbierendes Meßraster aufgebracht. Dadurch werden Beeinflussungen durch Reflexionen ausgeschlossen. Die Breite der einzelnen Meßrasterlinien sollte dabei so groß sein, daß die dadurch erzielte Schattenbildung in der CCD-Kamera maximal wird. Außerdem sollte die gesamte Versuchslänge $L_c$ der Probe mit Meßrasterlinien versehen sein, um die Endbruchmessung nach DIN EN 10002/1 durchführen zu können. Die Anzahl der Meßrasterlinien ist dabei $L_c/5 + 1$ (5 = Meßrasterlinienabstand in mm).

Der Verlauf des Zugkraftabfalls auf Null ist für verschiedene Materialien unterschiedlich. Deshalb kann es zweckmäßig sein, nach verschiedenen Kriterien den Augenblick zu bestimmen, dessen aktuelle Meßwerte für die Verarbeitung im Rechner benutzt werden sollen. Bei Zugproben mit flach abfallenden Kennlinien sollten diejenigen aktuellen Meßwerte verwendet werden, die geliefert werden, wenn die Zugkraft auf den Wert Null abgefallen ist. Bei steil abfallenden Kennlinien können dagegen die Werte im Moment der größten Kraftabfallgeschwindigkeit verwertet werden.

Um zu hohen Genauigkeiten zu kommen, sollte eine CCD-Kamera verwendet werden, mit der ein pixelgenaues Auslesen möglich ist, und die über eine hohe Appertur verfügt. Diese Forderung ist erfüllt, wenn die Breite einer Rasterlinie wesentlich größer als der Abstand benachbarter Pixel ist.

Zur Bestimmung der Kanten der Rasterlinien auf der Probe vor dem Zugversuch und zur Bestimmung der gesuchten Versuchslänge über die Erfassung der Rasterlinien wird nach einer Ausgestaltung der Erfindung vorgeschlagen, daß aus den Verbindungsgeraden für die für nebeneinanderliegende Meßorte gelieferten Helligkeitswerte die mit der größten positiven und negativen Steigung ausgewählt werden und für den Abstand dieser Verbindungsgeraden, der gleich der Breite einer Rasterlinie ist, der Helligkeitswert dieser Rasterlinie bestimmt wird, aus deren Schnittpunkt mit den Verbindungsgeraden die Lage für die Ränder der Rasterlinie bestimmt wird. Durch Bildung der Differenz der so für die Kanten der Rasterlinien ermittelten Lagen, die der Versuchslänge der Zugprobe entsprechen, läßt sich unter Berücksichtigung des optischen Abbildungsmaßstabes die absolute Versuchslänge der Zugprobe vor dem Zugversuch bestimmen.

Sofern die Breite einer Rasterlinie nicht bekannt ist, was aufgrund der Dehnung nach dem Zugversuch der Fall ist, läßt sich nach einer anderen Methode ebenfalls die Kante einer Rasterlinie ermitteln. Nach dieser anderen Methode werden aus den Verbindungsgeraden für die für nebeneinander liegende Meßorte gelieferten Helligkeitswerte die mit der größten negativen oder positiven Steigung ausgewählt, wobei auf jeder dieser Verbindungsgeraden der Ort mit dem mittleren Helligkeitswert zwischen den nebeneinanderliegenden Meßorten für die Lage der vorderen oder hinteren Kante der zugehörigen Rasterlinie bestimmt wird. Die Länge der Versuchsprobe nach der Dehnung läßt sich dann wie bei der ersten Methode bestimmen.

Im folgenden wird die Erfindung anhand einer Zeichnung näher erläutert. Im einzelnen zeigen:

Figur 1 ein Diagramm für den Helligkeitsverlauf einer über zwei benachbarte Rasterlinien gehende Meßrasterzeile,

Figur 2 ein Diagramm für die Bestimmung der Lage einer Meßrasterlinie mit Berechnung der Kantenposition einer Rasterlinie bei bekannter Breite der Rasterlinie

**und**

Figur 3 ein Diagramm für die Bestimmung der Lage einer Meßrasterlinie mit Berechnung der Kantenposition nach der mittleren Helligkeit bei unbekannter Breite der Rasterlinie.

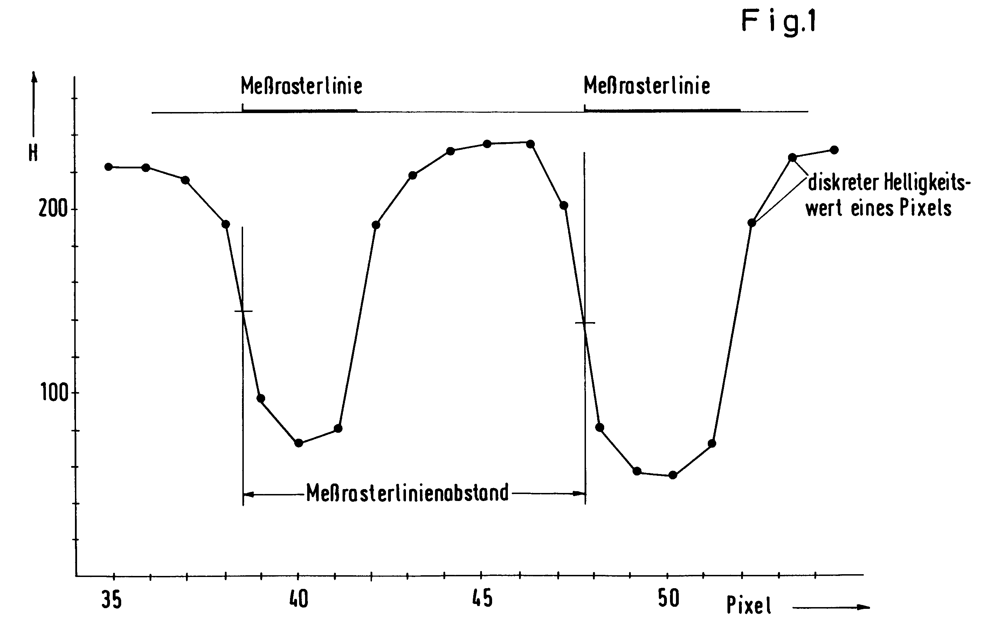

Figur 1 zeigt den Helligkeitsverlauf über eine Meßrasterzeile einer Probe ausschnittsweise. Dieser Helligkeitsverlauf wird von der CCD-Kamera erfaßt und an einen Rechner übertragen. Aus dem Diagramm ist ersichtlich, daß an den Kanten der Meßrasterlinien keine sprunghafte Helligkeitsänderung entsteht, sondern daß die Zu- und Abnahme der Helligkeit allmählich erfolgt. Über die Wahl einer Mindestbreite für die Meßrasterlinien läßt sich die maximal mögliche Abschattung erreichen. Trotz des allmählichen Helligkeitsübergangs kann die Position der Kante einer Meßrasterlinie durch ein geeignetes Interpolationsverfahren mit hinreichender Genauigkeit bestimmt werden.

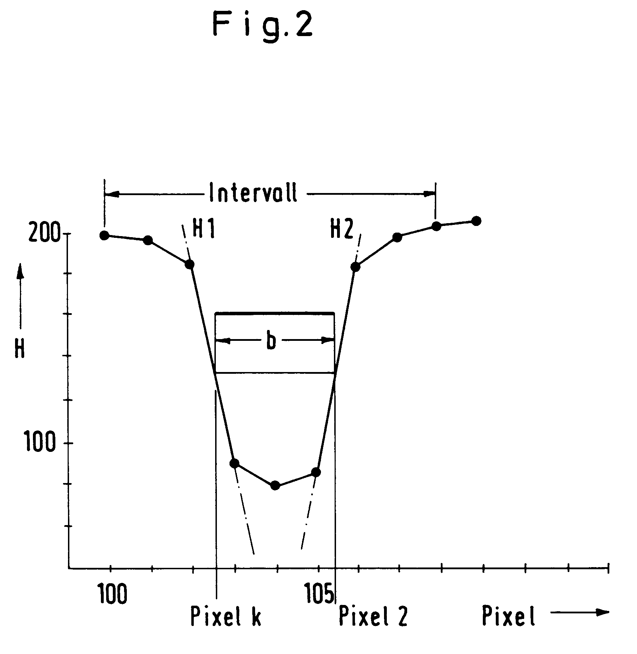

Die Bestimmung der Kantenposition geht beim Ausführungsbeispiel der Figur 2 davon aus, daß die Breite der Rasterlinien konstant und bekannt ist. Um die Lage der vorderen Kante (Pixel k) für die einzelnen nebeneinanderliegenden Meßrasterlinien zu bestimmen, werden die von der CCD-Kamera gemessenen diskreten Helligkeitswerte durch Geraden verbunden. Aus diesen Geraden werden in dem Intervall, in dem die Meßrasterlinie gefunden wurde, die Gerade H1 mit der größten positiven sowie die Gerade H2 mit der größten negativen Steigung herausgesucht und dafür die Koeffizienten $a0, a1$ beziehungsweise $b0, b1$ bestimmt. Nun wird aus den beiden Geradengleichungen $H1 = a0 + a1 \cdot Pixel$, $H2 = b0 + b1 \cdot Pixel$ der Helligkeitswert errechnet, bei dem die beiden Geraden eine Meßrasterlinienbreite $b$ Abstand voneinander haben. Dieser Helligkeitswert entspricht der Kantenposition einer Meßrasterlinie. Durch Einsetzen dieses Helligkeitswertes in die Geradengleichung mit der negativen Steigung erhält man die Pixelposition Pixel k der vorderen Kante. Nachstehend ist diese Berechnung wiedergegeben:

H1 = a0 + a1*Pixel     Gleichung des Hell-Dunkel-übergangs
H2 = b0 + b1*Pixel     Gleichung des Dunkel-Hell-übergangs

Gesucht ist der Helligkeitswert Hk, für den die Differenz der Pixelwerte Pixel2-Pixelk = b ist.

$$Hk = a0 + a1*Pixelk \rightarrow Pixelk = (Hk-a0)/a1$$
$$Hk = b0 + b1*Pixel2 \rightarrow Pixel2 = (Hk-b0)/b1$$

Bei bekannter Meßrasterlinienbreite b gilt:

$$Pixel2 - Pixelk = b = (Hk-b0)/b1 - (Hk-a0)/a1$$
$$\underline{Hk = (b^* + a1^*b1 + a1^*b0 - a0^*b1)/(a1 - b1)}$$

Die zugehörige Pixelposition:

$$\underline{Pixelk = (Hk-a0)/a1}$$

Die Differenzen der Pixelpositionen aller Kanten ergeben, multipliziert mit dem optischen Abbildungsmaßstab, die gesuchten Kantenabstände. Die Addition dieser Kantenabstände ergibt die Versuchslänge $L_c$.

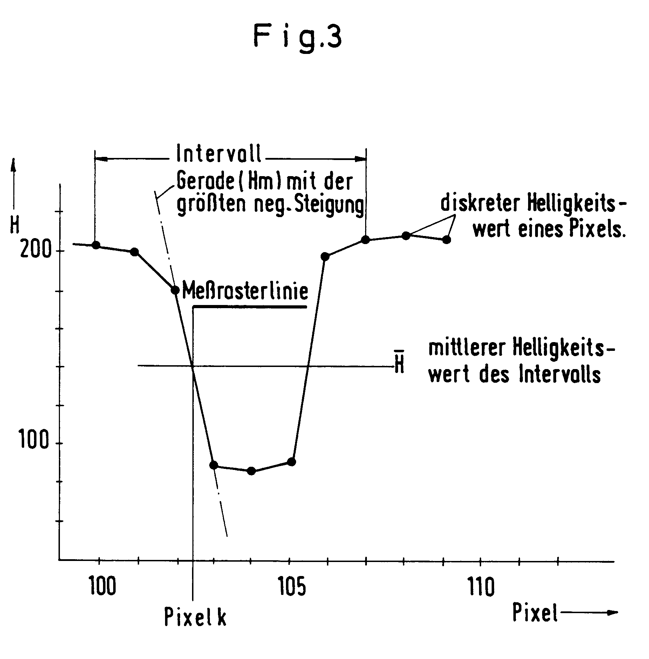

Nachdem die Probe gedehnt wurde, sind die Meßrasterlinien unterschiedlich breit. Die Bestimmung der Kantenpositionen nach Figur 3 erfolgt nach der Formel

$$\overline{H} = a0 + a1*Pixelk$$
$$Pixelk = (H-a0)/a1.$$

Hierbei wird die vordere Kantenposition (Pixel k) einer jeden Meßrasterlinie bestimmt, indem die Gerade Hm mit der größten negativen Steigung in dem Intervall, in dem die Meßrasterlinie gefunden wurde, herausgesucht wird. Für die Gerade Hm werden die Koeffizienten a0 und a1 bestimmt. Der Schnittpunkt dieser Geraden Hm mit der Geraden H für die mittlere Helligkeit des Intervalls ist die gesuchte Kantenposition.

Um nach dem erfindungsgemäßen Verfahren die Bruchdehnung zu bestimmen, werden auf der Probe die Meßrasterlinien aufgebracht. Danach wird an der in die Zugprüfmaschine eingespannten Probe geprüft, ob die Lichtverhältnisse eine Messung zulassen und ob die für die verwendete Versuchslänge $L_c$ erforderliche Anzahl Meßrasterlinien vorhanden ist. Dann wird der Abstand der Meßrasterlinien und der optische Abbildungsmaßstab, der sich bei unterschiedlich dicken Proben ändert, entsprechend der Methode nach Figur 2 oder 3 ermittelt. Danach wird der Zugversuch gestartet. Nach Überschreiten des Kraftmaximums werden laufend die Kraft und die Abstände der Meßrasterlinien gemessen und in dem Rechner gespeichert, bis die Probe gerissen ist. Von den so gelieferten Werten werden für die Auswertung entweder die bei der maximalen Kraftabfallgeschwindigkeit aufgenommenen Werte oder vorzugsweise die Werte bei Erreichen der Zugkraft Null verwertet. Der Augenblick der maximalen Kraftabfallgeschwindigkeit läßt sich durch Differenzieren der Kraftzeitkurve problemlos ermitteln.

Bei der Auswertung wird nach DIN EN 10002/1 vorgegangen, wobei für den Ort des Bruches der Ort der Probe ausgewählt wird, in dem der Abstand zweier benachbarter Meßrasterlinien am größten ist. Von diesem Ort aus wird dann die Meßlänge $L_u$ ermittelt, indem vom Ort des Bruches aus versucht wird, auf beiden Probenhälften die Anzahl Meßrasterlinien, die auf den halben Wert der Meßlänge $L_o$ entfallen, abzuzählen. Gelingt dies, so wird $L_u$ direkt durch Addition der dazwischenliegenden Abstände ermittelt. Gelingt dies nicht, so wird $L_u$ durch das in DIN EN 10002/1 beschriebene Verfahren der Endbruchmessung durch Verlegen des Bruches in die Mitte der Meßlänge ermittelt und für die Bruchdehnung in Beziehung zur Anfangsmeßlänge $L_o$ gesetzt.

**Patentansprüche**

1. Meßverfahren zur Bestimmung der Bruchdehnung an einer Zugprobe, insbesondere aus Metall, im rechnergesteuerten Zugversuch, bei dem mittels einer Liniensensorkamera (CCD-Kamera) eine auf der Zugprobe angebrachte, aus quer zur Zugrichtung verlaufenden Rasterlinien bestehende Meßrasterzeile erfaßt wird und für die dabei festgestellten unterschiedlichen Helligkeitswerte Meßwerte an einen Rechner geliefert werden, der, wenn die Zugkraft nach Überschreiten ihres Maximums auf Null abfällt, aus den aktuellen Meßwerten die Abstände benachbarter Rasterlinien errechnet und den Ort, an dem der Abstand zwischen zwei benachbarten Rasterlinien am größten ist, als Ort des Bruches auswählt sowie die Abstände zwischen den diesem Ort benachbarten Rasterlinien für die normgemäße Berechnung der Bruchdehnung verwertet.

2. Meßverfahren nach Anspruch 1,
   **dadurch gekennzeichnet,** daß diejenigen aktuellen Meßwerte für die Berechnung der Bruchdehnung verwertet werden, wenn die Zugkraft auf den Wert Null abgefallen ist.

3. Meßverfahren nach Anspruch 1,
   **dadurch gekennzeichnet,** daß die aktuellen Meßwerte für die Berechnung der Bruchdehnung im Moment der größten Abfallgeschwindigkeit der Zugkraft verwendet werden.

**4.** Meßverfahren nach einem der Ansprüche 1 bis 3,
**dadurch gekennzeichnet,** daß eine CCD-Kamera mit hoher Apertur verwendet wird, die ein pixelgenaues Auslesen gestattet.

**5.** Meßverfahren nach einem der Ansprüche 1 bis 4,
**dadurch gekennzeichnet,** daß aus den Verbindungsgeraden (H1,H2) für die für nebeneinanderliegende Meßorte gelieferten Helligkeitswerte die mit der größten positiven und negativen Steigung ausgewählt werden und für den Abstand dieser Verbindungsgeraden (H1,H2), der gleich der Breite (b) einer Rasterlinie ist, der Helligkeitswert (Hk) dieser Rasterlinie bestimmt wird, aus deren Schnittpunkt mit den Verbindungsgeraden (H1,H2) die Lage für die Ränder (Pixel k, Pixel 2) der Rasterlinien bestimmt wird.

**6.** Meßverfahren nach einem der Ansprüche 1 bis 5,
**dadurch gekennzeichnet,** daß aus den Verbindungsgeraden für die für nebeneinanderliegende Meßorte gelieferten Helligkeitswerte die mit der größten positiven oder negativen Steigung ausgewählt werden und auf jeder dieser Verbindungsgeraden der Ort mit dem mittleren Helligkeitswert ($\overline{H}$) zwischen den nebeneinanderliegenden Meßorten für die Lage der vorderen oder hinteren Kante der zugehörigen Rasterlinie bestimmt wird.

**Claims**

**1.** A measuring method for determining the elongation after fracture of a more paticularly metal testpiece in a computer controlled tensile test, wherein a measuring grid line, consisting of grid lines extending transversely of the pulling direction and applied to the tensile testpiece, is scanned by means of a line sensing camera (CCD camera) and for the different brigthness values detected as a result, measured values are supplied to a computer which, when the tensile force has exceeded its maximum and drops to zero, calculates from the measured values that time the distance is between adjacent grid lines and selects the locus, where the distance between two adjacent grid lines has its maximum value, as the place of the fracture and which utilizes the distance between the grid lines adjacent said place for the calculation to Standard of the elongation after rupture.

**2.** A measuring method according to claim 1, characterized in that for calculating the elongation after fracture use is made of the measured values at the time when the tensile force has dropped to zero.

**3.** A measuring method according to claim 1, characterized in that for calculating the elongation after rupture use is made of the measured values at the moment of maximum speed in the drop in tensile force.

**4.** A measuring method according to one of claims 1 to 3, characterized in that use is made of a CCD camera with a high aperture which permits a pixel-precise read-out.

**5.** A measuring method according to one of claims 1 to 4, characterized in that from the connecting straight lines (H1, H2) for the brightness values delivered for measuring places lying one beside the other, the connecting lines with the greatest positive and negative pitch are selected, and for the distance between said connecting straight lines (H1, H2), which is equal to the width (b) of a grid line, the brightness value (Hk) of said grid line is determined, from whose point of intersection with the connecting straight lines (H1, H2) the position for the edges (pixel k, pixel 2) of the grid lines is determined.

**6.** A measuring method according to one of claims 1 to 5, characterized in that from the connecting straight lines for the brightness values delivered for the measuring places lying one beside the other, the straight lines with the greatest positive or negative pitch are selected, and on each of said connecting straight lines the place with the mean brightness value ($\overline{H}$) between the measuring places lying one beside the other is determined for the position of the front or rear edge of the associated grid line.

**Revendications**

**1.** Procédé de mesure de détermination de l'allongement à la rupture sur une éprouvette de traction, en particulier de métal, au cours d'un essai de traction commandé par ordinateur, procédé dans lequel une rangée horizontale de trame de mesure constituée de lignes de trame s'étendant transversalement à la direction de traction et agencées sur l'éprouvette de traction est détectée en permanence par une caméra de détection de lignes (caméra CCD) et, pour les luminosités différentes qui y sont établies, des valeurs de mesure sont délivrées à un ordinateur qui, lorsque la force de traction tombe à zéro après dépassement de son maximum, calcule à partir des valeurs de mesure courantes les distances de lignes de trame voisines, choisit l'emplacement où la distance entre deux lignes de trame voisines est la plus grande comme emplacement de la rupture et évalue les distances entre les lignes de trame voisines de cet emplacement pour le calcul normalisé de l'allongement à la rupture.

2. Procédé de mesure selon la revendication 1, caractérisé en ce qu'on utilise pour le calcul de l'allongement à la rupture les valeurs de mesure courantes lorsque la force de traction est tombée à la valeur zéro.

3. Procédé de mesure selon la revendication 1, caractérisé en ce qu'on utilise pour le calcul de l'allongement à la rupture les valeurs de mesure courantes au moment de la plus grande vitesse de réduction de la force de traction.

4. Procédé de mesure selon l'une quelconque des revendications 1 à 3, caractérisé en ce qu'on utilise une caméra CCD de plus grande ouverture qui assure une lecture précise des pixels.

5. Procédé de mesure selon l'une quelconque des revendications 1 à 4, caractérisé en ce qu'on choisit parmi les droites de liaison (H1,H2) pour les luminosités délivrées pour les emplacements de mesure juxtaposés, celles de plus grande pente positive et de plus grande pente négative et on détermine, pour la distance de ces droites de liaison (H1,H2), qui est égale à la largeur (b) d'une ligne de trame, la luminosité (Hk) de cette ligne de trame, qui permet de déterminer la position des bords (pixel k, pixel 2) des lignes de la trame au point d'intersection avec les droites de liaison (H1, H2).

6. Procédé de mesure selon l'une quelconque des revendications 1 à 5, caractérisé en ce qu'on choisit parmi les droites de liaison pour les luminosités délivrées pour les emplacements de mesure juxtaposés, celles de plus grande pente positive ou négative et l'on détermine sur chacune de ces droites de liaison l'emplacement de luminosité moyenne (H) entre les emplacements de mesure juxtaposés pour la position de l'arête avant ou arrière de la ligne de trame concernée.

Fig.1

Fig.2

# Fig.3